Europäisches Patentamt

**European Patent Office**

Office européen des brevets

(19)

(11) Veröffentlichungsnummer: **0 019 705**
**B1**

(12) **EUROPÄISCHE PATENTSCHRIFT**

(45) Veröffentlichungstag der Patentschrift:
**23.11.83**

(21) Anmeldenummer: **80101906.8**

(22) Anmeldetag: **10.04.80**

(51) Int. Cl.³: **A 01 G 9/00,** A 01 G 13/00,
E 01 C 9/00

(54) Vorrichtung für die Anpflanzung von Bäumen u.dgl., insbesondere in Verkehrsbereichen.

(30) Priorität: **23.05.79 DE 2920873**

(43) Veröffentlichungstag der Anmeldung:
**10.12.80 Patentblatt 80/25**

(45) Bekanntmachung des Hinweises auf die Patenterteilung:
**23.11.83 Patentblatt 83/47**

(84) Benannte Vertragsstaaten:
**AT BE CH FR GB IT LI LU NL SE**

(56) Entgegenhaltungen:
**DE - A - 2 517 949**
**FR - A - 783 798**
**US - A - 1 689 017**
**US - A - 4 019 279**

(73) Patentinhaber: **Kuen, Eberhard, Sonnenbergstrasse 38,
D-7000 Stuttgart 1 (DE)**

(72) Erfinder: **Kuen, Eberhard, Dipl.-Ing.,
Sonnenbergstrasse 38, D-7000 Stuttgart 1 (DE)**
Erfinder: **Schmid, Hermann, Dürnauer Weg 2A,
D-7000 Stuttgart-Birkach (DE)**

(74) Vertreter: **Hosenthien, Heinz, Dr. Dipl.-Ing.,
Patentanwälte Dreiss, Hosenthien & Fuhlendorf
Gerokstrasse 6, D-7000 Stuttgart 1 (DE)**

# Vorrichtung für die Anpflanzung von Bäumen und dergleichen, insbesondere in Verkehrsbereichen

Die Erfindung betrifft eine Vorrichtung für die Anpflanzung von Bäumen u.dgl., insbesondere in Verkehrsbereichen, bestehend aus einem Fundament und einer auf diesem aufliegenden im Abstand über der Erdoberfläche angeordneten mehrteiligen Platte mit einer Aussparung für den Baumstamm od.dgl. und Durchbrüchen für den Wasser- und Luftzutritt (DE-A-2 517 949).

Insbesondere im inneren Stadtgebiet ist die Pflanzung von Einzel- und Reihenbäumen innerhalb des Strassenbereichs problematisch, da die für das natürliche Wachstum der Bäume notwendigen weiträumigen Grünflächen nicht vorhanden sind. Oft muss der Fussgängerverkehr und der Kraftfahrzeugverkehr unmittelbar über den Wurzelbereich geführt werden, so dass der ursprünglich lockere Pflanzboden im Laufe der Zeit verdichtet wird. Es kann kein Sauerstoff und kein Regenwasser mehr eindringen. Wird die unmittelbare Umgebung von Anpflanzungen mit Pflastersteinplatten od.dgl. belegt, so ergeben sich bei Neuanlagen durch Absenken des Bodens häufig Unebenheiten, die einer mehrmaligen nachträglichen Ausbesserung bedürfen. Diese Arbeiten sind aufwendig, es ist eine Unfallgefahr gegeben, die oft mit Folgekosten für die Stadt verbunden ist.

Aus der US-A-4 019 279 ist bei einer Anpflanzvorrichtung ein unten offener Trog vorgesehen. Die Baumwurzeln können sich nicht seitlich ausbreiten, sondern müssen in die Tiefe wachsen, was eine starke Wachstumsbehinderung bedingt. Der Trog ist oben offen, so dass hier beim Begehen das Erdreich stark verdichtet und dadurch wasser- und luftundurchlässig wird.

Aus der US-A-1 689 017 ist zur Transporterleichterung ein würfelförmiger Trog aus Drahtgewebe bekannt, der aber kaum begehbar ist und Fahrzeugbelastungen nicht standhält.

Der Erfindung liegt die Aufgabe zugrunde, eine Vorrichtung der eingangs genannten Art so zu verbessern, dass das natürliche Wachstum des Baums nicht behindert wird und keine laufenden Nachbesserungen an Pflasterungen u.dgl. im Umgebungsbereich der Bäume durchgeführt werden müssen.

Zur Lösung dieser Aufgabe sieht die Erfindung vor, dass das Fundament aus einem in den Boden versenkbaren Trog besteht, der in seiner Wandung und im Boden die Ausbreitung der Baum- od.dgl.-wurzeln gestattende Durchbrüche trägt und dessen Rand nach aussen zu von der Platte überragt wird.

Der im Boden versenkbare Trog kann fest im Untergrund aufgesetzt sein, so dass die auf dem Rand aufliegende Platte sicher abgestützt auch hohe Belastungen eines Fahrzeugverkehrs aufnehmen kann und trotzdem keine Wachstumsbehinderung durch Bodenverdichtung, Wasser- und Luftabsperrung eintritt.

Trog und Platte sind zweckmässig als Beton-Fertigbauteile ausgebildet. Auf diese Weise bleibt der lockere Pflanzboden durch Vermeidung von Belastungen aus dem Strassen- und Wegeverkehr erhalten, damit auch der natürliche Sauerstoffzutritt und die Wasserzuführung in den Wurzelbereich. Der Belag kann trotzdem dicht bis an den Baumstamm herangeführt werden, bei den beengten Strassenverhältnissen ist die Möglichkeit des Begehens der Pflanzfläche von besonderer Bedeutung. Die grossflächigen Durchbrüche in der Wandung und im Boden ermöglichen das ungehinderte Wachsen der Wurzeln in dem Aussenbereich. Die Platte bildet eine tragfähige Unterkonstruktion für den Strassen- bzw. Gehbelag, so dass sich die Bodenbeläge nicht mehr verlagern können und dadurch eine erhebliche Unfallgefahr ausgeräumt ist. Laufende Unterhaltungskosten für eine Boden-Auflockerung, eine Bodenauswechslung, für den Ersatz von zerbrochenen Bodenplatten, Nachpflasterungen u.dgl. entfallen. Die Vorrichtung ist so massiv ausgebildet, dass selbst Belastungen von Schwerlastwagen nach DIN 1072 Brückenklasse 30 aufgenommen werden, ein Befahren durch den Anliegerverkehr und die öffentlichen Ver- und Entsorgungsfahrzeuge ist ohne Einschränkung möglich.

In der Wand des Troges kann eine Bewässerungsöffnung vorgesehen sein, die über eine Leitung an eine Wasserleitung unter Zwischenschaltung eines Ventils angeschlossen ist. In einfachster Weise kann damit der Baumbereich durch die Betätigung des Ventils von aussen her bewässert werden.

Die Plattenteile werden nach dem Aufsetzen auf den Rand des Troges unter Zwischenlage einer Zementmörtelschicht an ihren Stosskanten kraftübertragend miteinander verbunden, so dass eine sichere gegenseitige Abstützung gegeben ist und die Platte auch bei stark einseitigen Belastungen keine Lageveränderung erfahren kann. Dazu tragen die die Stosskanten bildenden Stirnseiten der Plattenteile Aussparungen, die nach dem Zusammensetzen mit Beton ausgegossen werden, so dass sich ein Betonverguss-Schloss ergibt.

Nach einem weiteren Merkmal der Erfindung ist die Aussparung in der Mitte der Platte gross gehalten, in sie ragen Vorsprünge zur Auflage eines Rostes hinein, der wieder eine Öffnung für den Durchtritt des Baumstammes od.dgl. aufweist. Durch den begehbaren Rost kann dem Wurzelbereich ungehindert Sauerstoff und Regenwasser zugeführt werden, die Grösse der Aussparung ermöglicht sogar ein nachträgliches Einpflanzen gewisser Bäume. Vorzugsweise ist der Rost in Segmente unterteilt, die zweckmässig aus Gusseisen bestehen. Zur Rostzentrierung können auf den Vorsprüngen Führungsschienen aufgebracht sein, die aus halbkreisförmig gebogenen Winkeleisen bestehen. Auf ihnen ist der Rost unter Zwischenlage elastischer Glieder abgestützt. Diese Führungsschienen sind an den radialen Enden der Vorsprünge angeordnet, sie bilden auch eine Begrenzung für einen in einem Mörtelbett verlegten Klinkersteinbelag od.dgl. auf der Oberfläche der Platte. Die einzelnen Rostsegmente können an ihrem Öffnungsrand durch einen Stabilisierungsring miteinander verbunden sein.

Der Trog wird so in eine Bodengrube eingesetzt, dass die Oberseite der Platte bündig mit einem Pflasterbelag od. dgl. der Umgebung verläuft. Der Grund der Bodengrube ist mit einer Betonausgleichsschicht belegt, ebenso ist die Platte ausserhalb des Troges mit einer solchen mit einer Bewehrung versehenen Ausgleichsschicht (Ortbeton) unterfüttert.

Weitere Merkmale der Erfindung ergeben sich aus den Unteransprüchen, Einzelheiten sind anhand der Zeichnung, die beispielsweise Ausführungsformen darstellt, näher erläutert. Es zeigen:

Fig. 1 eine Draufsicht auf eine Vorrichtung im Massstab 1:25,

Fig. 2 einen Schnitt durch eine solche in den Erdboden eingesetzte Vorrichtung gemäss der Linie II–II in Fig. 1,

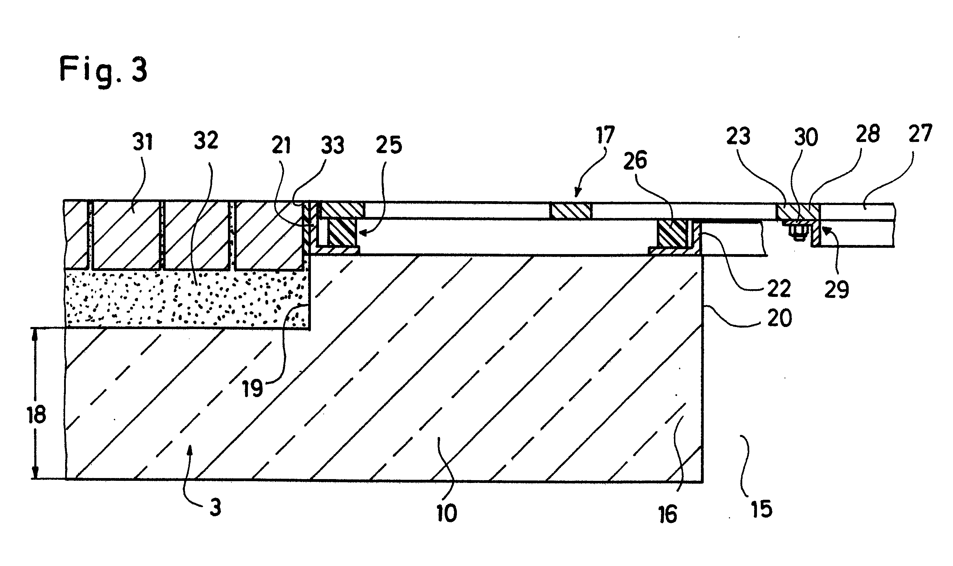

Fig. 3 einen Detailschnitt hierzu gemäss der Linie III–III in Fig. 1 im Massstab 1:5,

Fig. 4 eine Draufsicht auf eine Vorrichtung in einem kleineren Massstab in einer zweiten Ausführungsform.

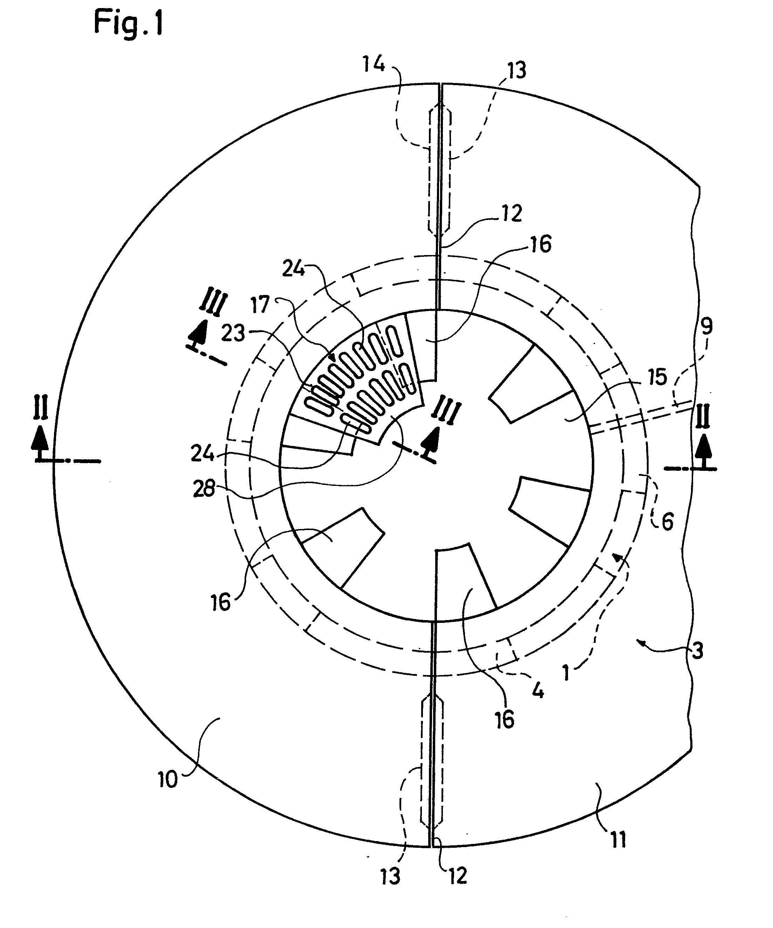

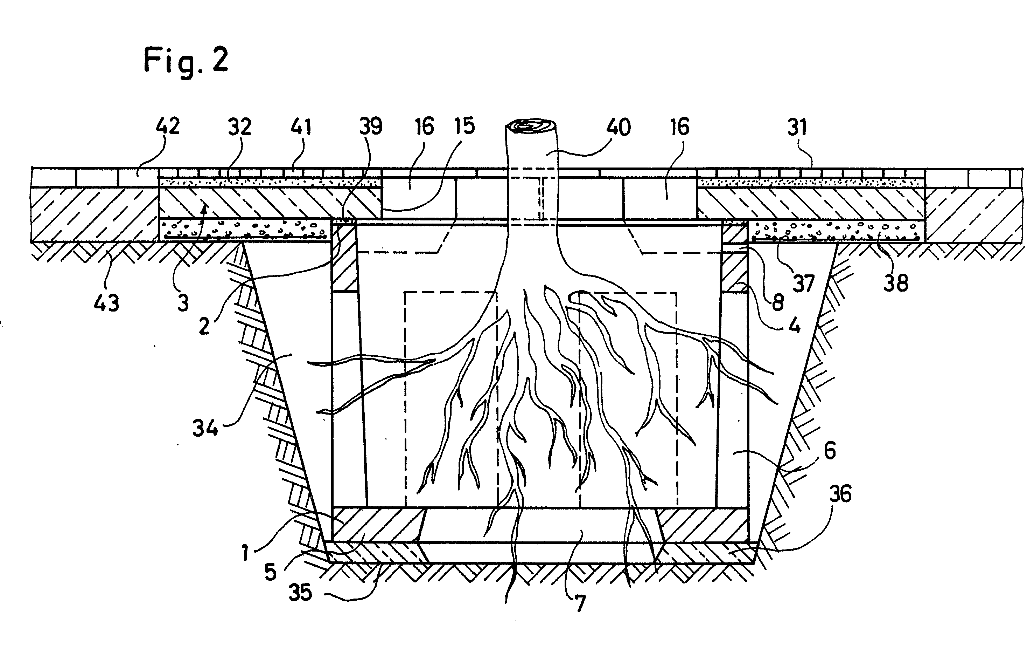

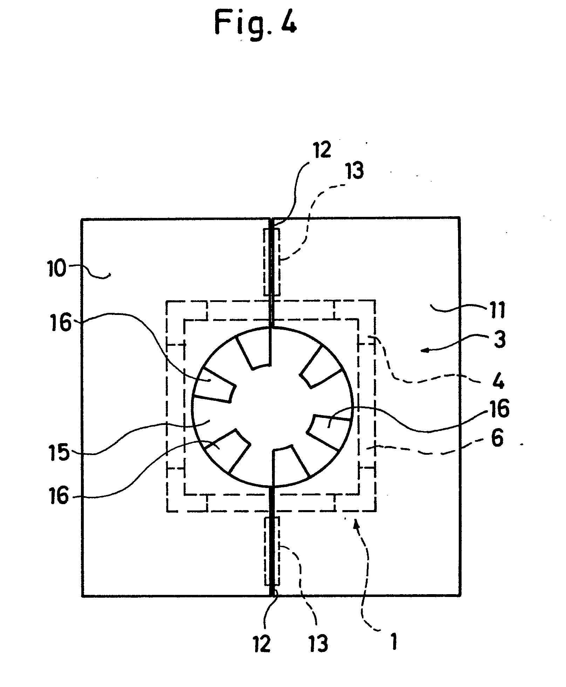

Die Vorrichtung besteht im wesentlichen aus einem Trog 1 und einer auf dessen Rand 2 sitzenden Platte 3. Der Trog 1 ist als Beton-Fertigbauteil ausgebildet, seine Wandung 4 und sein Boden 5 sind mit grossen Durchbrüchen 6, 7 versehen, durch die die Baumwurzeln hindurchwachsen können. Die Aussenmasse des Troges 1 können bei 1–3 m liegen, er kann kreiszylindrisch (Fig. 1 und 2), quadratisch (Fig. 4) oder in einer anderen passenden Raumform gehalten sein. Bei der Ausbildung und den Abmessungen nach den Fig. 1 und 2 beträgt sein Gewicht 4,3 t (4,4 Mp). In der Wandung 4 ist in der Nähe des Randes 2 eine Bewässerungsöffnung 8 vorgesehen, die mit einer Leitung 9 über ein nicht näher dargestelltes Ventil mit einer Wasserleitung verbunden sein kann.

Die Platte 3 besteht aus zwei Hälften 10, 11 die ebenfalls als Beton-Fertigbauteile ausgebildet sind und die in den Stirnseiten der Stosskanten 12 Aussparungen 13 tragen, die nach dem Zusammensetzen mit Beton 14 ausgegossen werden, so dass jeweils ein Beton-Verguss-Schloss gegeben ist. Bei der Ausbildung nach den Fig. 1 und 2 bilden die Plattenhälften 10, 11 Halbkreisringe, bei der Ausbildung nach Fig. 4 halbe Quadrate mit einer mittigen grossen Aussparung 15. Die Platte 3 ist also in ihrer Konfiguration auf den Trog 1 abgestimmt, wobei ihre Aussenmasse etwa die doppelte Grösse der Aussenmasse des Troges 1 haben.

In die Aussparung 15 ragen sechs über den Umfang gleichmässig verteilte Vorsprünge 16 hinein, die der Auflage eines Rostes 17 dienen. Die Vorsprünge 16 übersteigen die Höhe 18 der Platte 3, an ihren radialen Enden 19, 20 sind Führungsschienen 21, 22 festgelegt, die aus halbkreisförmig gebogenen Winkeleisen bestehen. Nach dem Zusammenfügen der Plattenhälften 10, 11 bildet die Führungsschiene 21, 22 einen Kreisring, in dem der Rost 17 zentriert ist, der selbst wieder aus sechs einzelnen Segmenten 23 besteht, die aus Gusseisen hergestellt sind und längliche Durchbrüche 24 tragen, wie sich aus dem einen Segment 23, das in der Fig. 1 dargestellt ist, ergibt. Der Rost 17 liegt über elastische Glieder 25, 26, z.B. aus biegbaren Strängen aus Gummi oder Kunststoff, auf den Führungsschienen 21, 22 auf, am inneren, eine Öffnung 27 abgebenden Rand 28 sind die einzelnen Segmente 23 über einen aus einem Winkeleisen bestehenden Stabilisierungsring 29 miteinander verbunden, dabei ist der eine Schenkel 30 dieses Ringes 29 im Bereich des Randes 28 mit den Segmenten 23 verschraubt.

Ausserhalb der Vorsprünge 16 und der Führungsschiene 21 ist ein Belag aus Klinkersteinen 31 od. dgl. über ein Mörtelbett 32 aufgegeben, eine Dehnfuge 33 aus dauerelastischem Kitt od. dgl. verhindert Beschädigungen bei unterschiedlichen Dehnungen bei verschiedenen Temperaturen. Die in den Fig. 1 und 2 dargestellte Platte hat bei den dortigen Abmessungen ein Gewicht von z.B. 6,5 t (6,6 Mp).

Der Trog 1 wird in einer Bodengrube 34 versenkt, er steht mit seinem Trogboden 5 auf einer auf dem Grund 35 aufgebrachten Beton-Ausgleichsschicht 36 auf. Der Trog 1 wird dann mit pflanzfähigem Boden aufgefüllt, nachdem die Leitung 9 angeschlossen worden ist. Es werden die mit einer Bewehrung 37 versehene Betonzwischenlage 38 und die Zementmörtelschicht 39 auf den Rand 2 aufgetragen, danach werden die Plattenhälften 10, 11 aufgesetzt und das Betonverguss-Schloss eingebracht. Jetzt oder zuvor wird der Baum eingepflanzt, dessen Stamm 40 durch die Aussparung 15 bzw. die Öffnung 27 dringt. Die Klinkersteine 31 können auf die Plattenhälften 10, 11 schon aufgebracht sein, sie können aber auch an Ort und Stelle verlegt werden, wobei die Belegung über die Platte 3 hinaus vorgenommen werden kann. Nach der Einsetzung des Baumes werden die Rostsegmente 23 eingelegt und über den Stabilisierungsring 29 verbunden. Der Trog 1 ist so tief eingesetzt, dass die Oberseite 41 der Platte 3 bündig ist mit dem Pflasterbelag 42 od. dgl. des Bodens 43.

**Patentansprüche**

1. Vorrichtung für die Anpflanzung von Bäumen u. dgl., insbesondere in Verkehrsbereichen, bestehend aus einem Fundament und einer auf diesem aufliegenden im Abstand über der Erdoberfläche angeordneten mehrteiligen Platte (3) mit einer Aussparung (15) für den Baumstamm (40) od. dgl. und Durchbrüchen (24) für den Wasserund Luftzutritt, dadurch gekennzeichnet, dass das Fundament aus einem in den Boden (43) versenkbaren Trog (1) besteht, der in seiner Wandung (4) und im Boden (5) die Ausbreitung der Baumod. dgl. -wurzeln gestattende Durchbrüche (6, 7) trägt und dessen Rand (2) nach aussen zu von der Platte (3) überragt wird.

2. Vorrichtung nach Anspruch 1, dadurch gekennzeichnet, dass der Trog (1) als Beton-Fertigbauteil ausgebildet ist.

3. Vorrichtung nach Anspruch 1, dadurch gekennzeichnet, dass in der Wandung (4) des Troges (1) eine Bewässerungsöffnung (8) vorgesehen ist, die über eine Leitung (9) an eine Wasserleitung unter Zwischenschaltung eines Ventils angeschlossen ist.

4. Vorrichtung nach Anspruch 1, dadurch gekennzeichnet, dass die die Stosskanten (12) bildenden Stirnseiten der Plattenteile Aussparungen (13) tragen, die nach dem Zusammensetzen mit Beton (14) ausgegossen sind.

5. Vorrichtung nach Anspruch 1, dadurch gekennzeichnet, dass die Aussenmasse der Platte (3) etwa doppelt so gross sind wie die Aussenmasse des Troges (1).

6. Vorrichtung nach Anspruch 1, dadurch gekennzeichnet, dass die Aussenform der Platte (3) der Aussenform des Troges (1) entspricht.

7. Vorrichtung nach Anspruch 1, dadurch gekennzeichnet, dass die Platte (3) aus zwei unter sich gleichen Hälften (10, 11) besteht, dass die Hälften (10, 11) aus Beton-Fertigbauteilen bestehen und die Aussparung (15) mittig angeordnet ist.

8. Vorrichtung nach Anspruch 1, dadurch gekennzeichnet, dass in die Aussparung (15) Vorsprünge (16) zur Auflage eines Rostes (17) hineinragen, der eine Öffnung (27) für den Durchtritt des Baumstammes (40) od.dgl. aufweist.

9. Vorrichtung nach Anspruch 8, dadurch gekennzeichnet, dass auf den Vorsprüngen (16) Führungsschienen (21, 22) aufgebracht sind, die den Rost (17) zentrieren.

10. Vorrichtung nach Anspruch 9, dadurch gekennzeichnet, dass der Rost (17) auf den Führungsschienen (21, 22) unter Zwischenlage elastischer Glieder (25, 26) abgestützt ist.

11. Vorrichtung nach Anspruch 10, dadurch gekennzeichnet, dass die elastischen Glieder (25, 26) aus biegbaren, elastischen Strängen aus Gummi oder Kunststoff bestehen.

12. Vorrichtung nach Anspruch 9 oder 10, dadurch gekennzeichnet, dass die Führungsschienen (21, 22) aus Winkeleisen bestehen, die halbkreisförmig gebogen sind.

13. Vorrichtung nach den Ansprüchen 9 und 12, dadurch gekennzeichnet, dass die Aussparung (15) in der Platte (3) im Zentrum derselben kreisförmig gehalten ist, die Vorsprünge (16) über die Höhe (18) der Platte (3) vorstehen und die Führungsschienen (21, 22) an den radialen Enden (19, 20) der Vorsprünge (16) angeordnet sind.

14. Vorrichtung nach Anspruch 13, dadurch gekennzeichnet, dass die Oberfläche des ausserhalb der Vorsprünge (16) und des äusseren Führungsringes (21) liegenden Teiles der Platte (3) mit in einem Mörtelbett (32) verlegten Klinkersteinen (31) od.dgl. belegt ist.

15. Vorrichtung nach Anspruch 14, dadurch gekennzeichnet, dass zwischen den Klinkersteinen (31) und dem Führungsring (21) eine Dehnfuge (33) aus dauerelastischem Kitt od.dgl. angeordnet ist.

16. Vorrichtung nach Anspruch 8, dadurch gekennzeichnet, dass der Rost (17) in Segmente (23) unterteilt ist und dass die Segmente (23) an ihrem Öffnungsrand (28) über einen Stabilisierungsring (29) miteinander verbunden sind.

17. Vorrichtung nach Anspruch 16, dadurch gekennzeichnet, dass der Stabilisierungsring (29) aus einem Winkeleisen besteht, dessen einer Schenkel (30) mit den Segmenten (23) verschraubt ist.

18. Vorrichtung nach Anspruch 1, dadurch gekennzeichnet, dass die Platte (3) auf den Rand (2) des Troges (1) unter Zwischenlage einer Zementmörtelschicht (39) aufgelegt ist.

19. Vorrichtung nach Anspruch 1, dadurch gekennzeichnet, dass der Trog (1) in eine Bodengrube (34) eingesetzt ist und die Oberseite (41) der Platte (3) bündig mit einem Pflasterbelag (42) od.dgl. der Umgebung verläuft.

20. Vorrichtung nach Anspruch 19, dadurch gekennzeichnet, dass der Grund (35) der Bodengrube (34) mit einer Beton-Ausgleichsschicht (36) belegt ist und die Platte (3) ausserhalb des Troges (1) mit einer bewehrten Beton-Zwischenlage (38) unterfüttert ist.

## Claims

1. Apparatus for planting trees or the like, especially in traffic areas, comprising a base and a plate (3) supported by the base and further arranged in spaced relation with respect to the earth surface, said plate (3) being made of a plurality of parts and provided with an opening (15) for the tree trunk (40) or the like and perforations (24) for the access of water and air, characterized in that the base consists a trough (1), which is sinkable into the ground (43), said trough having in its wall (4) and bottom (5) perforations (6, 7) allowing the expansion of the roots of the trees or the like and the rim (2) of which in the outward direction is surmounted by the plate (3).

2. Apparatus in accordance to claim 1, characterized in that the trough (1) is a ready-made concrete element.

3. Apparatus in accordance to claim 1, characterized in that in the wall (4) of the trough (1) an opening (8) for watering is provided, which by means of a supply line (9) and via a valve is connected to a water supply line.

4. Apparatus in accordance to claim 1, characterized in that the faces of the plate parts, which form the edges (12) butting each other, are provided with recesses (13), which are cast-filled with concrete (14) after having been put together.

5. Apparatus in accordance to claim 1, characterized in that the outer dimensions of the plate (3) are approximately twice as large as the outer dimensions of the trough (1).

6. Apparatus in accordance to claim 1, characterized in that the outer form of the plate (3) corresponds to the outer form of the trough (1).

7. Apparatus in accordance to claim 1, characterized in that the plate (3) consists of two halves (10, 11), being equal to each other, and that the halves (10, 11) are made out of ready-made concrete elements and the opening (15) is provided in the middle area.

8. Apparatus in accordance to claim 1, characterized in that protrusions (16) project into the opening (15) for supporting a grid (17), which is provided with an opening (27), through which the tree trunk or the like extends.

9. Apparatus in accordance to claim 8, characterized in that on the projections (16) guide rails (21, 22) are provided, which serve to centrally position the grid (17).

10. Apparatus in accordance to claim 9, characterized in that the grid (17) is supported by the guide rails (21, 22) by elastic members (25, 26) provided in between.

11. Apparatus in accordance to claim 10, characterized in that the elastic members (25, 26) consists of bandable elastic strands of rubber or plastic.

12. Apparatus in accordance to claim 9 or 10, characterized in that the guide rails (21, 22) consists of angled iron, which is bent in semi-circular form.

13. Apparatus in accordance to claims 9 and 12, characterized in that the opening (15) in the plate (3) in the central portion of the same has the form of a circle, that the projections (16) project over the height (18) of the plate and that the guide rails (21, 22) are provided at the radial ends (19, 20) of the projections (16).

14. Apparatus in accordance to claim 13, characterized in that the surface of the portion of the plate (3) lying outside the projections (16) and the outer guide ring (21) is covered with bricks (31) or the like, which are received in a bed of mortar.

15. Apparatus in accordance to claim 14, characterized in that between the brick stones (31) and the guide ring (21) an expansion groove (33) of permanently elastic cement is provided.

16. Apparatus in accordance to claim 8, characterized in that the grid (17) is partitioned into segments (23) and that the segments (23) at their opening rim (28) are connected with each other by means of a stabilizer ring (29).

17. Apparatus in accordance to claim 16, characterized in that the stabilizer ring (29) consists of a angled iron, the one leg (30) of which is connected by screws with the segments (23).

18. Apparatus in accordance to claim 1, characterized in that the plate (3) is positioned onto the rim (2) of the trough (1) by putting a layer of cement mortar (39) in between them.

19. Apparatus in accordance to claim 1, characterized in that the trough (1) is sinked into a hole (34) in the ground and that the upper side (41) of the plate (3) is aligned with the cover (42) of the street or the like of the surrounding area.

20. Apparatus in accordance to claim 19, characterized in that the bottom (35) of the hole (34) in the ground (36) is covered by a concrete compensating layer (36) and the plate (3) outside of the trough (1) is supported with an iron-armatured concrete intermediate layer (38).

## Revendications

1. Dispositif pour implantation d'arbres et analogues, en particulier dans des zones de circulation, se composant d'un fondement et d'une plaque (3) en plusieurs parties disposées à une certaine distance de celui-ci, à la surface du sol, avec un évidement (15) pour le tronc d'arbre (40) ou analogue et des interruptions (24) pour l'entrée d'eau et d'air, caractérisé en ce que le fondement se compose d'un bac (1) s'enfonçant dans le sol qui porte, sur ses parois (4) et au fond (5), des interruptions (6, 7) permettant le développement des racines de l'arbre ou analogue et dont le bord (2) est dépassé, vers l'extérieur, par la plaque (3).

2. Dispositif selon la revendication 1, caractérisé en ce que le bac (1) a la forme d'une pièce préfabriquée en béton.

3. Dispositif selon la revendication 1, caractérisé en ce que dans les parois (4) du bac (1) est prévue une ouverture (8) d'arrosage qui est reliée, par une conduite (9), à une conduite d'arrivée d'eau avec une soupape intercalée.

4. Dispositif selon la revendication 1, caractérisé en ce que les côtés frontaux des parties de plaque formant les rebords (2) portent des évidements (13) qui, après assemblage, sont scellés avec du béton (14).

5. Dispositif selon la revendication 1, caractérisé en ce que la dimension externe (3) de la plaque est quelque peu égale au double de la dimension externe du bac (1).

6. Dispositif selon la revendication 1, caractérisé en ce que la forme externe de la plaque (3) correspond à la forme externe du bac (1).

7. Dispositif selon la revendication 1, caractérisé en ce que la plaque (3) se compose de deux moitiés identiques, en ce que les moitiés (10, 11) se composent de pièces préfabriquées en béton et l'évidement (15) est disposé au milieu.

8. Dispositif selon la revendication 1, caractérisé en ce que dans l'évidement (15) font saillie des protubérances (16) pour la réception d'une grille (17) qui présentent une ouverture (27) pour le passage du tronc de l'arbre (40) ou analogue.

9. Dispositif selon la revendication 8, caractérisé en ce que sur les protubérances (16) sont disposés des rails de guidage (21, 22) qui centrent la grille (17).

10. Dispositif selon la revendication 9, caractérisé en ce que la grille (17) est appuyée, sur les rails de guidage (21, 22) avec interposition d'organes élastiques (25, 26).

11. Dispositif selon la revendication 10, caractérisé en ce que les organes élastiques (25, 26) se composent de tronçons élastiques flexibles en caoutchouc ou matière synthétique.

12. Dispositif selon l'une quelconque des revendications 9 ou 10, caractérisé en ce que les rails de guidage (21, 22) se composent de cornières qui sont courbées en forme de demi-cercle.

13. Dispositif selon les revendications 9 et 12, caractérisé en ce que l'évidement (15) dans la plaque (3) est maintenu en forme de cercle, en son centre, les protubérances (16) débordent sur la hauteur (18) de la plaque (3) et les rails de guidage (21, 22) sont disposés sur les extrémités radiales (19, 20) des protubérances (16).

14. Dispositif selon la revendication 13, caractérisé en ce que la surface de la partie de la plaque (3) se trouvant en dehors des protubérances (16) et de la bague externe de guidage (21) est garnie de pierres de clinker (31) posées dans un lit de mortier (32).

15. Dispositif selon la revendication 14, caractérisé en ce qu'entre les pierres de clinker (31) et la bague de guidage (21) est disposé un joint de dilatation (33) en ciment ou analogue à élasticité permanente.

16. Dispositif selon la revendication 8, caractérisé en ce que la grille (17) est divisée en segments (23) et en ce que les segments (23) sont reliés, les uns aux autres, à leur bord d'ouverture (28), par une bague de stabilisation (29).

17. Dispositif selon la revendication 16, caractérisé en ce que la bague de stabilisation (29) se compose d'une cornière dont une aile (30) est vissée aux segments (23).

18. Dispositif selon la revendication 1, caractérisé en ce que la plaque (3) est disposée sur le bord (2) du bac (1) avec une couche de mortier au ciment (39) intercalée.

19. Dispositif selon la revendication 1, caractérisé en ce que le bac (1) est disposé dans une fosse (34) dans le sol et le dessus (41) de la plaque (3) se confond avec l'environnement en étant de même niveau qu'un pavage (42) ou analogue.

20. Dispositif selon la revendication 19, caractérisé en ce que la bave (35) de la fosse (34) dans le sol est couverte d'une couche d'égalisation (36) en béton et la plaque (3) en dehors du bac (1) est doublée d'une couche intermédiaire (38) en béton armé.

Fig.1

Fig. 2

0 019 705

Fig. 3

# Fig. 4